# EUROPEAN PATENT SPECIFICATION

(11) **EP 2 529 881 B1**
(45) Date of publication and mention of the grant of the patent: **15.10.2014**
(21) Application number: 12166128.4
(22) Date of filing: 30.04.2012
(51) Int. Cl.: B23Q 1/01, B23Q 1/54, B23Q 11/00

(54) **Machine tool**
Maschinenwerkzeug
Machine-outil

(30) Priority: 31.05.2011 JP 2011122550
(43) Date of publication of application: 05.12.2012
(73) Proprietor: Brother Kogyo Kabushiki Kaisha, Nagoya-shi, Aichi 467-8561 (JP)
(72) Inventor: Ishibashi, Nobuaki, Nagoya-shi, Aichi 467-8562 (JP)
(74) Representative: Prüfer & Partner GbR European Patent Attorneys

(56) References cited:
- EP-A1- 1 862 253
- EP-A2- 0 712 682
- DE-A1-102009 025 009

## Description

The present invention relates to a machine tool that cuts a workpiece fixed to a workpiece fixing unit with a tool.

### Description of Related Art

In general, a machine tool performs various types of processes such as milling, tapping and the like. The machine tool takes out a predetermined tool from a tool magazine which stores plural tools and attaches it to a main shaft to cut a workpiece, based on instructions from a control unit.

A machine tool is disclosed in Japanese Patent Application Laid-Open No. 1993-42406. The machine tool includes a workpiece positioning device for fixing a workpiece and a base which moves in the direction of the X axis (left-right direction) and the direction of the Y axis (front-back direction). The base and the workpiece positioning device are separated from each other in the front-back direction. The workpiece positioning device rotates around the X axis, i.e. the axis of rotation. A main shaft head to which the tool is attached is provided on the base.

The tool attached to the main shaft head approaches the workpiece fixed to the workpiece positioning device by control of a control unit, to cut the workpiece. Here, the base moves in the X-axis and Y-axis directions, while the workpiece positioning device rotates with the X axis serving as the axis of rotation.

Since the base and the workpiece positioning device are separated from each other in the Y-axis direction, the whole machine tool is elongated, reducing the rigidity of the entire machine tool. This may cause distortion in the machine tool due to impact and oscillation occurred at the time of cutting the workpiece. It is desired for the base and the workpiece to be close to each other.

The workpiece positioning device, however, rotates in the X-axis direction, requiring a space for avoiding contact between the base and the workpiece positioning device. The conventional machine tool therefore has such a problem that the base and the workpiece positioning device cannot be arranged sufficiently close to each other.

DE-102009025009 discloses a machine tool according to the preamble of claim 1.

### SUMMARY OF THE INVENTION

An object of the present invention is to arrange a device for holding a workpiece sufficiently close to a device for supporting a tool.

A machine tool according to the invention is defined in claim 1.

Even if the motor fixed to the rotary table approaches the tool support by rotation of the rotary table, the motor is positioned in the concave, preventing the motor from touching the tool support and allowing the distance between the tool support and the platforms to be shortened. Thus, the machine tool has a shortened total length and enhanced rigidity.

The dust generated at the time of cutting a workpiece, such as chips of the workpiece and coolant, moves through the passage and inclined plane and is discharged from the exhaust port.

According to another embodiment of the invention, the width of the exhaust passage is wider on an opposite side of the exhaust port than the side of the exhaust port.

Since the width of the exhaust passage is narrower at the side of the exhaust port and wider at the opposite side of the exhaust port, chips, coolant and the like scattered to the opposite side of the exhaust port are collected to the exhaust port.

The machine tool according to another embodiment is **characterized in that** the side surface of the exhaust passage has a protruding curved plane.

By thus forming the side surface of the passage to be a curved plane protruding inward, the chips, coolant and the like smoothly move toward the exhaust port.

According to another embodiment of the invention, a surface of the tool support where the concave is formed rises from the base unit. The concave is formed all the way through the vertical direction at the surface where the concave is formed and continues vertically to the exhaust port.

Since the concave continues vertically to the exhaust port so as to have the entire area inside thereof serving as the exhaust port, chips, coolant and the like can easily be discharged.

According to another embodiment of the invention, a portion around the concave at the upper surface of the tool support is inclined downward to the concave.

The chips and coolant adhered to the portion around the concave are collected to the concave.

According to another embodiment, the tool support has a column, around the concave, having a trapezoidal horizontal section with a top surface on the side of the concave and a bottom surface on the opposite side of the concave, the bottom surface being longer than the top surface.

Since the dimension on the opposite side of the concave is longer than that on the side of the concave, the rigidity around the concave is enhanced compared to the case where the dimension of the bottom surface is the same as that of the top surface, realizing maintenance in the strength.

The machine tool according to another embodiment is **characterized in that** an exhaust hole for discharging dust is arranged on the opposite side of the exhaust port at the upper surface of the base unit, with the tool support located between the exhaust port and the exhaust hole. Upper surfaces of the tool support are inclined downward to the exhaust port and the exhaust hole, respectively, from the central part of the upper surfaces.

The dust adhered to the upper surface of the tool support, such as chips, coolant and the like, moves toward the exhaust port and the exhaust hole and is discharged.

The machine tool according to another embodiment is **characterized in that** a base exhaust port penetrating vertically to discharge dust is provided at the base unit below the tool support. A support exhaust passage penetrating in a direction in which the support platforms face each other to discharge dust is formed at a side surface of the tool support.

The dust scattered from the tool support, such as chips, coolant and the like, passes through the support exhaust passage and is discharged from the base exhaust port.

According to another embodiment, the width of the support exhaust passage is wider at the opposite side of the base exhaust port than at the side of the base exhaust port.

Since the width of the support exhaust passage is narrower at the side of the base exhaust port and wider at the opposite side of the base exhaust port, the dust scattered to the opposite side of the base exhaust port, such as chips, coolant and the like, is collected to the base exhaust port.

### BRIEF DESCRIPTION OF THE DRAWINGS

Fig. 1 is a perspective view schematically illustrating a machine tool;

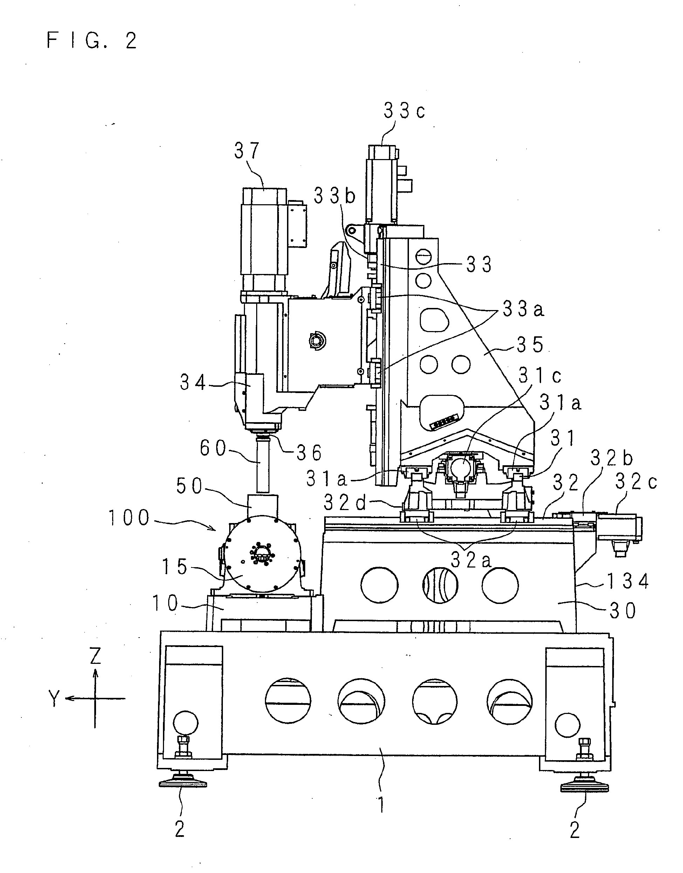

Fig. 2 is a side view schematically illustrating the machine tool;
Fig. 3 is a perspective view schematically illustrating a workpiece holding device;
Fig. 4 is a perspective view schematically illustrating a base unit, supporting platforms and a tool support;
Fig. 5 is a plan view schematically illustrating the base unit, the supporting platforms and the tool support;
Fig. 6 is a right side view schematically illustrating the base unit, the supporting platforms and the tool support;
Fig. 7 is a schematic bottom view of the base unit;
Fig. 8 is a perspective view schematically illustrating a machine tool in which a rotary table is rotated by approximately 90 degrees toward the front side; and
Fig. 9 is a perspective view schematically illustrating a base unit, support platforms and a tool support of a modification example.

### DETAILED DESCRIPTION

### Embodiment

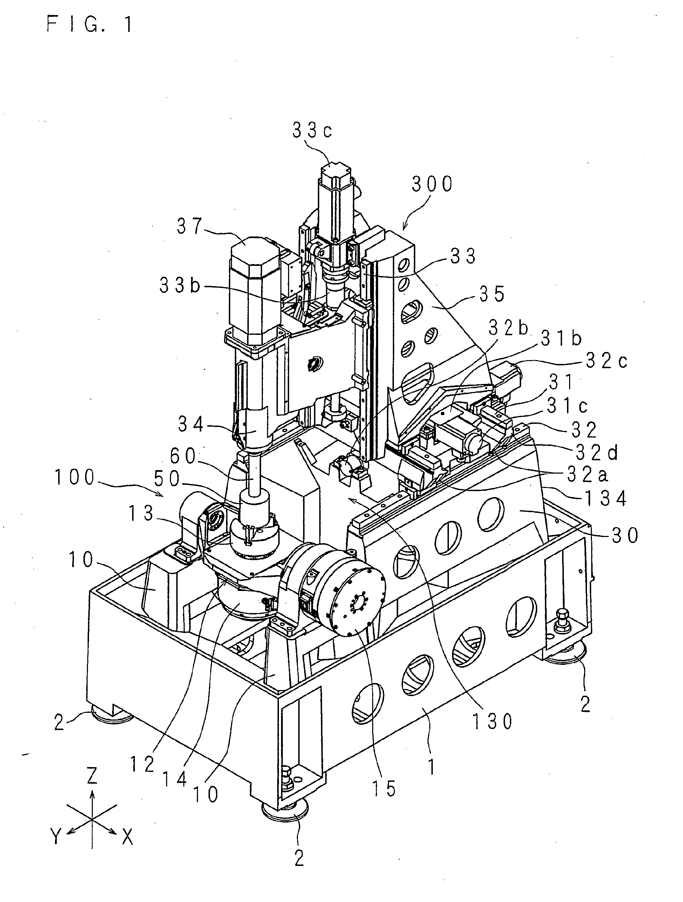

A machine tool according to an embodiment of the present invention will be described in detail with reference to the drawings. The left below part in Fig. 1 corresponds to the front side of the machine tool. The machine tool includes a base unit 1 having a shape of a rectangular box which is elongated in the front-back direction. Legs 2, 2, 2 and 2 are provided at four corners at the lower part of the base unit 1. A tool holding device 300 for holding a tool 60 and a workpiece holding device 100 for holding a workpiece are provided on the upper surface of the base unit 1. The workpiece holding device 100 is located at the front side of the base unit 1 while the tool holding device 300 is located at the rear side of the base unit 1.

The base unit 1 includes a tool support 30 at the rear side thereof. The tool support 30 has a rectangular shape elongated in the front-back direction. The tool support 30 is integrally formed with the base unit 1.

Y-axis rails 32, 32 that are longer in the front-back direction (Y-axis direction) are arranged at left and right ends, respectively, on the upper surface of the tool support 30. Two sliders 32a, 32a are engaged with the respective Y rails 32 at the lower surfaces thereof to be slidable, the upper surfaces thereof being fixed to a movable body 32d. The movable body 32d has a rectangular shape elongated in the left-right direction (the X-axis direction). A Y-axis ball screw mechanism 32b which is in parallel with the Y-axis rails 32 is arranged at the upper surface of the tool support 30 and between the Y-axis rails 32. A Y-axis motor 32c is arranged at the back end of the Y-axis ball screw mechanism 32b. The Y-axis motor 32c drives the Y-axis ball screw mechanism 32b. The movable body 32d is connected to a nut (not shown) of the Y-axis ball screw mechanism 32b. The nut of the Y-axis ball screw mechanism 32b moves in the Y-axis direction as the Y-axis motor 32c rotates. Accordingly, the movable body 32d moves in the Y-axis direction.

Two X-axis rails 31, 31 that are longer in the left-right direction (X-axis direction) are arranged on the upper surface of the movable body 32d and at the both front and back ends, respectively, of the movable body 32d. Two sliders 31a, 31a are engaged with the respective X-axis rails 31, 31 at the lower surface thereof to be slidable, the upper surface thereof being fixed to the lower surface of a column 35. The column 35 supports a main shaft head 34 and has a columnar shape which is longer in the up-down direction. An X-axis ball screw mechanism 31b which is in parallel with the X-axis rails 31 is arranged between X-axis rails 31. An X-axis motor 31c is arranged at the right end of the X-axis ball screw mechanism 31b. The X-axis motor 31c drives the X-axis ball screw mechanism 31b.

The column 35 is connected to a nut (not shown) of the X-axis ball screw mechanism 31b. The nut of the X-axis ball screw mechanism 31b moves in the X-axis direction as the X-axis motor 31c rotates. Accordingly, the column 35 moves in the X-axis direction.

Z-axis rails 33, 33 are arranged at left and right ends, respectively on the front surface of the column 35. The Z-axis rails 33, 33 are longer in the up-down direction (z-axis direction). Two sliders 33a, 33a are engaged with the respective Z-axis rails 33 at the back surfaces thereof to be slidable, the front surfaces thereof being fixed to the back surface of the main shaft head 34. The main shaft head 34 has a shape of a substantially rectangular parallelepiped and rotatably supports a main shaft 36 at the inside thereof. A Z-axis ball screw mechanism 33b which is in parallel with the Z-axis rail 33 is arranged between the Z-axis rails 33 and 33. The Z-axis motor 33c is arranged at the upper end of the Z-axis ball screw mechanism 33b. The Z-axis motor 33c drives the Z-axis ball screw mechanism 33b. The main shaft head 34 is connected to a nut (not shown) of the Z-axis ball screw mechanism 33b. The nut of the Z-axis ball screw mechanism 33b moves in the Z-axis direction as the Z-axis motor 33c rotates. Accordingly, the main shaft head 34 moves in the Z-axis direction. The main shaft motor 37 is arranged at the upper end of the main shaft head 34. The main shaft motor 37 rotates the main shaft 36 around the Z axis. The main shaft 36 holds a tool 60. The tool 60 includes a rotating tool in which the main shaft 36 rotates while a workpiece stops, and a non-rotating tool in which the main shaft 36 stops while a workpiece itself rotates. The rotating tool or non-rotating tool can be attached to the main shaft 36. When a workpiece is cutted with the non-rotating tool, a fixing member (not shown) is used for fixing the non-rotating tool to the main shafthead 34.

Two support platforms 10, 10 are arranged at the left and right sides, respectively, with a certain distance in between at the front part of the upper surface of the base unit 1. The support platforms 10, 10 support the workpiece holding device 100.

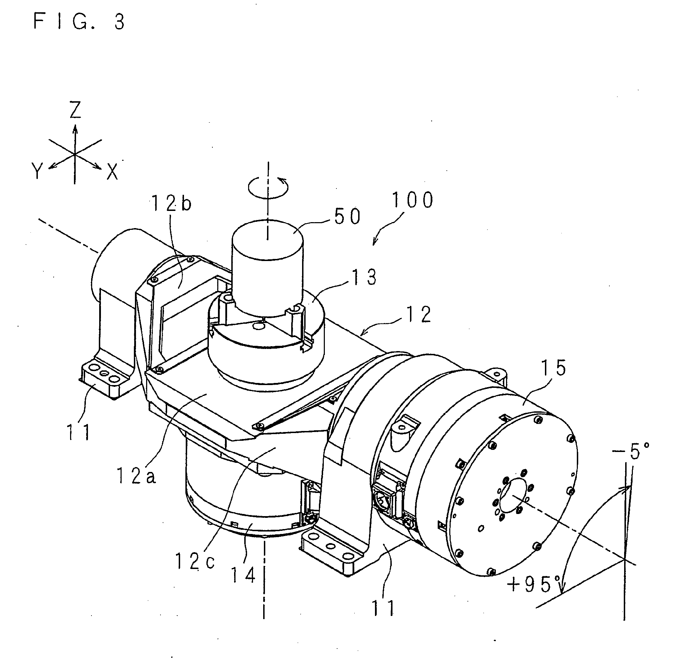

Referring to Fig. 3, the workpiece holding device 100 is provided with two fixing units 11, 11. The fixing units 11, 11 are fixed to the support platforms 10, 10. A rotary table 12 is arranged between the fixing units 11 and 11. The rotary table 12 rotatably supports a circular workpiece fixing unit 13. The rotary table 12 includes a table unit 12a, a left connecting unit 12b and a right connecting unit 12c. The workpiece fixing unit 13 is located on one surface (the top surface in Fig. 3) of the table unit 12a. The workpiece fixing unit 13 can rotate around an axis which is perpendicular to the above-described one surface. A rotary motor 14 is fixed on the other surface (the bottom surface in Fig. 3) of the table unit 12a. The rotary motor 14 rotates the workpiece fixing unit 13. The axial direction of the workpiece fixing unit 13 is perpendicular to the table unit 12a. The left connecting unit 12b extends from the table unit 12a in the upper left direction and is connected to the fixing unit 11 on the left side so as to be rotatable around the X axis. The right connecting unit 12c extends from the table unit 12a in the upper-right direction and is connected to the fixing unit 11 on the right side so as to be rotatable around the X axis.

The motor 15 is fixed to the fixing unit 11 on the right side. The motor 15 rotates the rotary table 12 around the X axis. The rotational axis of the motor 15 is connected to the right connecting unit 12c. As shown in Fig. 3, assuming that the rotational angle from the upper side of the Z axis toward the back side is a negative angle while the angle from the upper side of the Z axis toward the front side is a positive angle, the rotary table 12 rotates by the rotation of the motor 15 in the angle range between -5 and +95 degrees. Since margins of -5 to 0 degrees and +90 to +95 degrees are set, the rotary table 12 reliably rotates in the range between 0 degrees and +90 degrees even if an error occurs at the time of assembly. Because the rotary table 12 rotates toward the front side by 90 degrees or more, a worker can attach and remove the workpiece 50 to/from the workpiece fixing unit 13 at the front part of the machine tool where a working space can easily be secured, improving the working efficiency. It is difficult to secure a working space when the rotary table 12 rotates toward the back side by 90 degrees or more.

An example will be described where a non-rotating tool is attached to the main shaft 36 to cut the workpiece 50.

As shown in Fig. 3, the workpiece 50 is fixed to the workpiece fixing unit 13 and rotates in the Z-axis direction as the rotary motor 14 rotates.

The tool 60 attached to the main shaft 36 touches the workpiece 50 by the X-axis motor 33a through the Z-axis motor 33c. As the workpiece 50 is rotating, the tool 60 can cut the workpiece 50 even if the tool 60 does not rotate. Here, since the motor 15 can determine the inclination of the workpiece 50 around the X axis, the tool 60 can also cut the workpiece 50 at an inclined position.

Another example will now be described where a rotating tool is attached to the main shaft 36 to cut the workpiece 50.

The tool 60 is rotated by the main shaft motor 37. The rotated tool 60 touches the workpiece 50 by the X-axis motor 33a through the Z-axis motor 33c, to cut the workpiece 50. The motor 15 is also used here to allow the tool 60 to cut the workpiece 50 at an inclined position. Note that the rotary motor 14 may be used to rotate the workpiece 50.

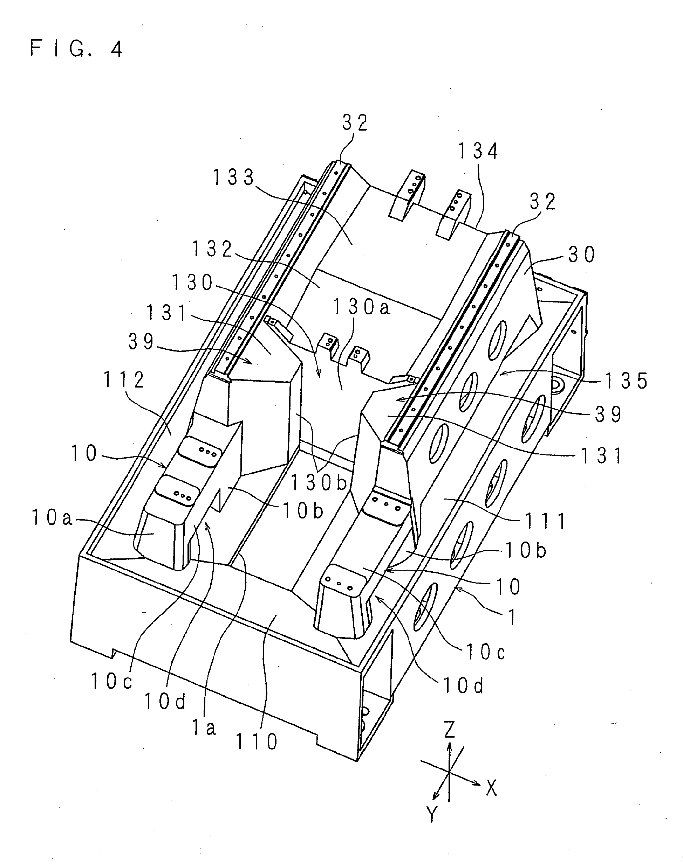

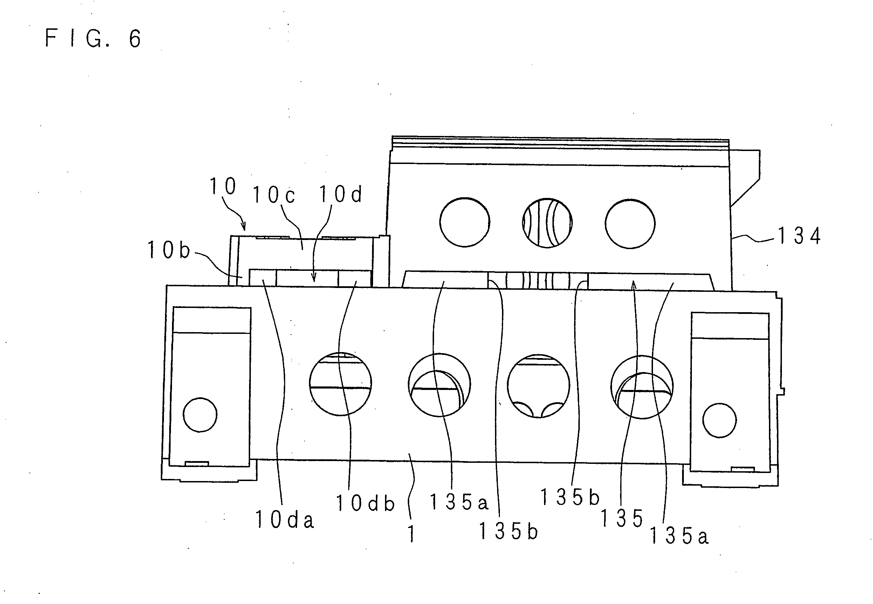

Description will now be made with reference to Figs. 4 to 7.

An exhaust port 1a is arranged at the front part on the upper surface of the base unit 1. The exhaust port 1a penetrates vertically to discharge dust. The exhaust port 1a has a rectangular shape with its longer sides in the front-back direction, and is substantially horizontal. On the upper surface of the base unit 1, a portion from the front end of the exhaust port 1a to the front end of the base unit 1 forms a front inclined plane 110. The front inclined plane 110 is inclined from the upper end of the front end part of the base unit 1 to the rear and lower side. The width in the left-right direction of the front inclined plane 110 is gradually reduced toward the front end of the exhaust port 1a. On the upper surface of the base unit 1, a portion continuing to the front inclined plane 110 and the right end of the base unit 1 forms a right inclined plane 111. The right inclined plane 111 is inclined from the upper end to the left and lower side toward the exhaust port 1a. The right inclined plane 111 continues to the right edge of the exhaust port 1a. On the upper surface of the base unit 1, a portion continuing to the front inclined plane 110 and the left end of the base unit 1 forms a left inclined plane 112. The left inclined plane 112 is inclined from the upper end to the right and lower side toward the exhaust port 1a. The left inclined plane 112 continues to the left edge of the exhaust port 1a. An exhaust hole 1b is provided at the rear edge on the upper surface of the base unit 1. The exhaust hole 1b discharges dust. The exhaust hole 1b penetrates in the Z-axis direction. The right and left edges of the exhaust hole 1b continue to the right inclined plane 111 and left inclined plane 112, respectively. The front end of the exhaust hole 1b continues to a back side plane 134 which is substantially in parallel with the Z-axis direction of the tool support 30. The back side surface 134 continues to the right inclined plane 111 and the left inclined plane 112.

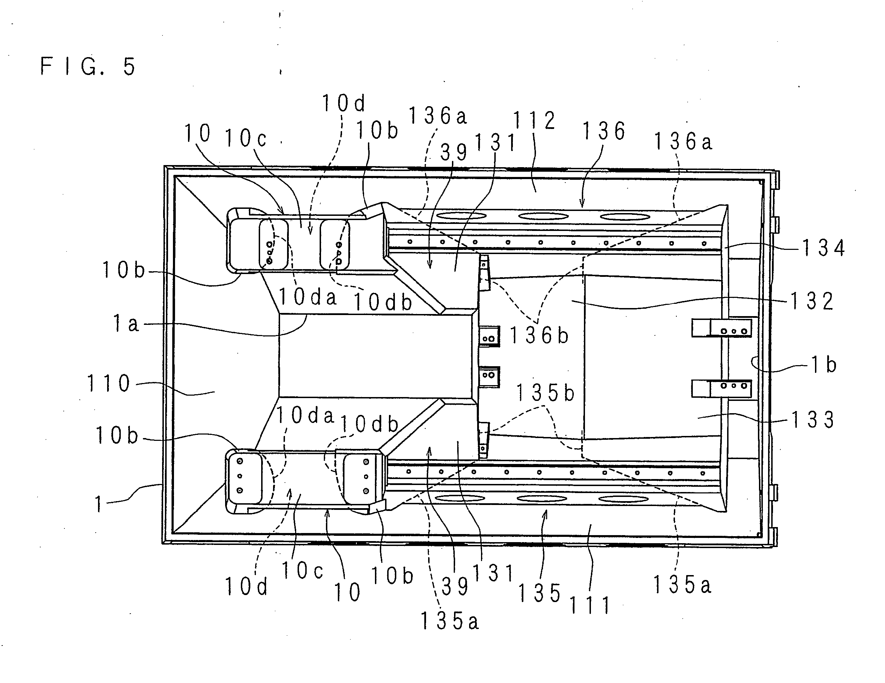

A gate-shaped support platform 10 stands on each of the front inclined plane 110 and the right inclined plane 111. The support platform 10 is integrally formed with the front inclined plane 110 and the right inclined plane 111. The support platform 10 has legs 10a, 10b and a beam 10c. The legs 10a and 10b are arranged at the front and back sides, respectively. The beam 10c, which is substantially in parallel with the Y-axis direction, connects the upper ends of the legs 10a and 10b. The leg 10a stands at the boundary of the front inclined plane 110 and the right inclined plane 111. The leg 10b stands on the right inclined plane 111. The space enclosed by the legs 10a, 10b and the beam 10c forms an exhaust passage 10d. The exhaust passage 10d penetrates in the X-axis direction to lead dust to the exhaust port 1a. As shown in Fig. 5, each of a front side surface 10da and a back side surface 10db of the exhaust passage 10d has a curved plane protruding to the central part of the passage. The front-to-back width of the exhaust passage 10d on the right side is wider on the right side (opposite side of the exhaust port 1a) than that on the left side (the side of the exhaust port 1a).

Similar gate-shaped support platforms 10 also stand on the front inclined plane 110 and the left inclined plane 112, respectively. As shown in Fig. 5, the width in the front-back direction of the exhaust passage 10d on the left side is wider at the opposite side of the exhaust port 1a than at the side of the exhaust port 1a. The dust scattered around the support platform 10, such as chips of a workpiece and coolant for example, moves through each exhaust passage 10d, the front inclined plane 110, the right inclined plane 111 and the left inclined plane 112, to be discharged from the exhaust port 1a.

The tool support 30 is connected to the rear part (legs 10b, 10b on the rear side) of the both support platforms 10, 10. The support platforms 10, 10 and the tool support 30 are integrally molded using a metal material (iron, copper, zinc or aluminum, for example). A concave 130 is formed at a central part in the X-axis direction on the front side surface of the tool support 30. The concave 130 is recessed to the rear side. The concave 130 has a U-shaped horizontal section. The bottom surface 130a and each of the side surfaces 130b, 130b of the concave 130 are substantially in parallel with the Z-axis direction and are substantially perpendicular to the horizontal plane. At the lower edge of the concave 130, the bottom surface 130a and side surfaces 130b, 130b continue to the rear, left and right edges of the exhaust port 1a, respectively. The portion around the concave 130 of the tool support 30 is formed to be thicker than the other portions, having higher rigidity.

The upper surface at the front part of the tool support 30 forms inclined planes 131, 131. The inclined planes 131, 131 are inclined downward to the concave 130. The inclined planes 131, 131 continue to side surfaces 130b, 130b of the concave 130. At the front part of the tool support 30, a column 39 elongated in the vertical direction is formed at the bottom part of the inclined plane 131. The inclined plane 131 forms an upper surface of the column 39. The column 39 has a trapezoidal horizontal section. The trapezoid has a top surface on the side of the concave 130 and a bottom surface on the opposite side of the concave 130 (the side of the Y-axis rail 32). The bottom surface is longer than the top surface. The column 39 maintains the strength around the Y-axis rail 32. The side surface 130b corresponds to the top surface in the shape of the horizontal section. The upper surface of the rear part of the tool support 30 has a front upper surface 132 and a rear upper surface 133. The front upper surface 132 is inclined downward to the front side from the central part in the Y-axis direction. The rear upper surface 133 is inclined downward to the rear side from the central part in the Y-axis direction. The rear upper surface 133 continues to the back side surface 134 of the tool support 30. The coolant adhered to the front upper surface 132 moves forward and is discharged from the exhaust port 1a. The coolant adhered to the rear upper surface 133 moves backward to be discharged from the exhaust hole 16.

A support exhaust passage 135 is formed at the lower part on the right side of the tool support 30. The support exhaust passage 135 penetrates in the X-axis direction to discharge dust. As shown in Fig. 5, the front side surface and the rear side surface of the support exhaust passage 135 have inclined portions 135a, 135a and parallel portions 135b, 135b, respectively. The inclined portions 135a, 135a are inclined such that the front-back width is narrower on the left side than that on the right side of the support exhaust passage 135. The parallel portions 135b, 135b continue to inclined portions 135a, 135a and extend to the inner side (left side) of the tool support 30. The parallel portions 135b, 135b are substantially in parallel with the X-axis direction. The support exhaust passage 136 is formed at the lower part on the left side surface of the tool support 30. The support exhaust passage 136 penetrates in the X-axis direction. The front side surface and the rear side surface of the support exhaust passage 136 have inclined portions 136a, 136a and parallel portions 136b, 136b, respectively. The inclined portions 136a, 136a are inclined such that the front-back width on the right side is narrower than that on the left side of the support exhaust passage 136. The parallel portions 136b, 136b continue to the inclined portions 136a, 136a and extend to the inner side (right side) of the tool support 30. The parallel portions 136b, 136b are substantially in parallel with the X-axis direction.

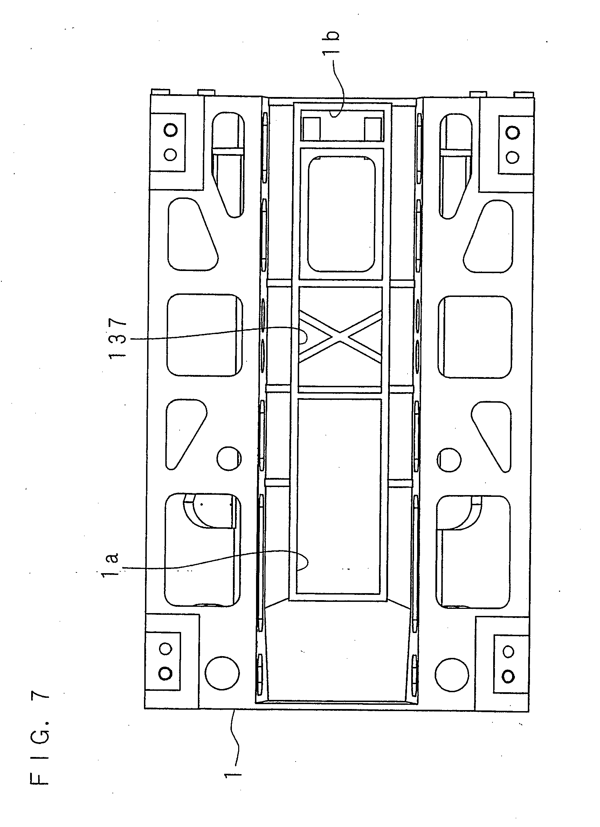

As shown in Fig. 7, a base exhaust port 137 is provided below the tool support 30 and at the bottom surface of the base unit 1. The base exhaust port 137 penetrates vertically to discharge dust. The base exhaust port 137 has a rectangular shape elongated in the front-back direction and is substantially horizontal. The base unit exhaust port 137 is located at approximately the same position as the parallel portions 135b and 136b in the Y-axis direction. The dust scattered around the tool support 30 moves through the right inclined plane 111, left inclined plane 112, each of the support exhaust passages 135 and 136, and is discharged from the exhaust hole 1b and the base exhaust port 137. A conveyer (not shown) is arranged below the base unit 1 and carries the discharged dust and the like.

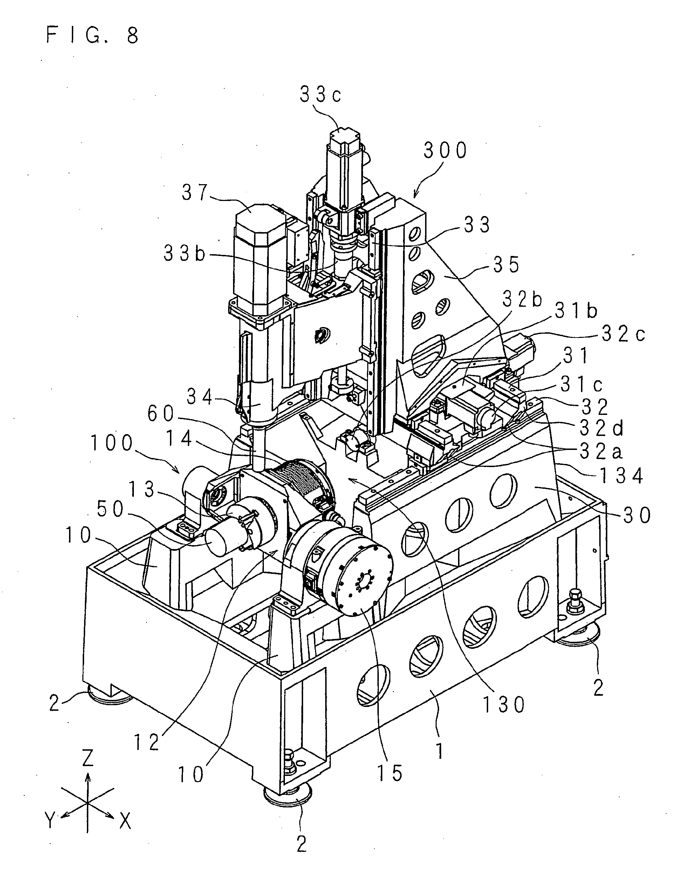

Referring to Fig. 8, when the motor 15 rotates the rotary table 12 to the front side by approximately 90 degrees, the rotary motor 14 is located at the inner side of the concave 130. Here, a predetermined space is present between the rotary motor 14 and the concave 130. Even if the rotary table 12 rotates, the rotary motor 14 does not touch the tool support 30.

Even if the rotary motor 14 approaches the tool support 30 by rotation of the rotary table 12, the rotary motor 14 is positioned in the concave 130. The rotary motor 14 does not touch the tool support 30, and thus the entire length of the tool support 30 and the support platforms 10 can be shortened. The machine tool therefore has a shortened total length and enhanced rigidity.

A design having a predetermined space between the rotary motor 14 and the concave 130 allows a worker to attach a necessary part to the outside the rotary motor 14 even if the rotary table 12 is rotated to the front side by approximately 90 degrees.

Chips, coolant and the like of a workpiece generated at the time of cutting the workpiece move through the front inclined plane 110, the right inclined plane 111, the left inclined plane 112 and the exhaust passage 10d, to be discharged from the exhaust port 1a. Thus, the machine tool can surely dispose of the chips and the like. The front-back width of the exhaust passage 10d is narrower at the side of the exhaust port 1a and wider at the opposite side of the exhaust port 1a. The chips, coolant and the like scattered to the opposite side of the exhaust port 1a is collected to the exhaust port 1a.

Each of the front side surface 10da and the rear side surface 10db of the exhaust passage 10d of the support platform 10 is formed in a curved plane protruding inward. The chips, coolant and the like pass through the exhaust passage 10d and smoothly move toward the exhaust port 1a. Since each of the bottom surface 130a and the side surface 130b of the concave 130 is perpendicular to the edge of the exhaust port 1a, the chips, coolant and the like easily fall down to the exhaust port 1a. The upper surface of the tool support 30 is formed by the inclined front upper surface 132 and the inclinedrear upper surface 133. The chips, coolant and the like adhered to the upper surface of the tool support 30 move to the base exhaust port 137 and the exhaust hole 1b, to be discharged. The chips, coolant and the like scattered from the tool support 30 pass through the support exhaust passages 135, 136 of the tool support 30 and are discharged through the base exhaust port 137. The support exhaust passages 135 and 136 are narrower on the side of the base exhaust port 137 and wider on the opposite side of the base exhaust port 137. Thus, the chips, coolant and the like scattered to the opposite side of the base exhaust port 137 are collected to the base exhaust port 137.

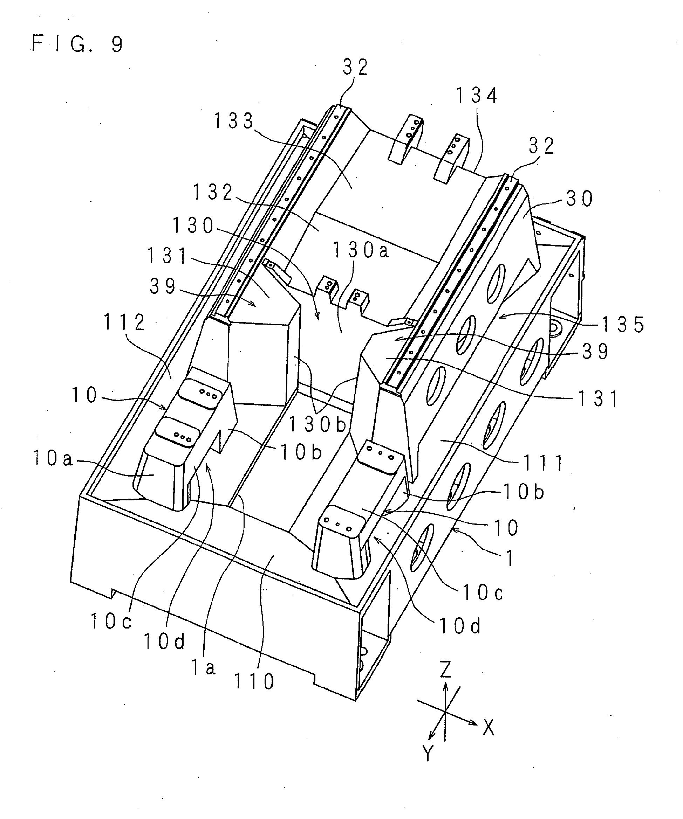

A modification example is now described with reference to Fig. 9. The support platforms 10, 10 are adjacent to but are not touching the tool support 30. A gap is formed between the support platforms 10, 10 and the tool support 30.

Though, in the embodiment and the modification described above, the support platforms 10, 10 and the tool support 30 are integrally formed with each other by molding metal material, the method of forming them are not limited thereto. The support platforms 10, 10 and the tool support 30 may also be integrally formed by welding a metal plate (a steel plate, a copper plate, a zinc plate or an aluminum plate, for example), or may be integrally formed by bending or pressing a metal plate.

## Claims

1. A machine tool including a workpiece holding device (100) holding a workpiece (50), two opposing support platforms (10, 10) supporting the workpiece holding device (100) and a tool support (30) supporting a tool (60) for cutting the workpiece (50), wherein
the tool support (30) has a box shape,
the workpiece holding device (100) includes:
a workpiece fixing unit (13) for holding the workpiece (50);
a rotary table (12) bridged between the support platforms (10, 10), rotatable around an axis (X) in a direction in which the support platforms (10, 10) face each other and supporting the workpiece fixing unit (13) such that the workpiece fixing unit (13) can rotate around another axis perpendicular to said axis (X); and
a motor (14) for rotating the workpiece fixing unit (13) at the rotary table (12) at an opposite side of a side on which the workpiece fixing unit (13) is supported,
a concave (130) is formed at a surface (130a) of the tool support (30) facing to the rotary table (12) and located between the support platforms (10, 10), and
the motor (14) is positioned in the concave (130) when the rotary table (12) rotates,
the machine tool being **characterized by** comprising a base unit (1) supporting the support platforms (10, 10) and the tool support (30), wherein
an exhaust port (1a) penetrating vertically to discharge dust is provided between the support platforms (10, 10) on an upper surface of the base unit (1),
a portion around the exhaust port (1a) on the upper surface is inclined toward a side of the exhaust port (1a), and
an exhaust passage (10d) penetrating in a direction in which the support platforms (10, 10) face each other to
discharge dust is formed at the support platforms (10, 10).

2. The machine tool according to Claim 1, **characterized in that** a width of the exhaust passage (10d) is wider at an opposite side of the exhaust port (1a) than the side of the exhaust port (1a).

3. The machine tool according to Claim 1 or 2, **characterized in that** a side surface of the exhaust passage (10d) has a protruding curved plane.

4. The machine tool according to any one of Claims 1 to 3, **characterized in that**
a surface (130a) of the tool support (30) where the concave (130) is formed rises from the base unit (1), and
the concave (130) is formed all the way through an entire vertical direction at the surface (130a) where the concave (130) is formed and continues vertically to the exhaust port (1a).

5. The machine tool according to any one of Claims 1 to 4, **characterized in that** a portion around the concave (130) at the upper surface of the tool support (30) is inclined downward to the concave (130).

6. The machine tool according to Claim 4, **characterized in that** the tool support (30) has a column (39), around the concave (130), having a trapezoidal horizontal section with a top surface on a side of the concave (130) and a bottom surface on an opposite side of the concave (130), the bottom surface being longer than the top surface.

7. The machine tool according to any one of Claims 1 to 4, **characterized in that**
an exhaust hole (1b) for discharging dust is arranged on the opposite side of the exhaust port (1a) at the upper surface of the base unit (1), with the tool support (30) located between the exhaust port (1a) and the exhaust hole (1b),
upper surfaces (132, 133) of the tool support (30) are inclined downward to the exhaust port (1a) and the exhaust hole (1b), respectively, from a central part of the upper surfaces.

8. The machine tool according to any one of Claims 1 to 7, **characterized in that**
a base exhaust port (137) penetrating vertically to discharge dust is provided at the base unit (1) below the tool support (30), and
a support exhaust passage (135, 136) penetrating in a direction in which the support platforms (10, 10) face each other to discharge dust is formed at a side surface of the tool support (30).

9. The machine tool according to Claim 8, **characterized in that** a width of the support exhaust passage (135, 136) is wider at an opposite side of the base exhaust port (137) than at a side of the base exhaust port (137).

## Patentansprüche

1. Maschinenwerkzeug, das eine Werkstückhaltevorrichtung (100), die ein Werkstück (50) hält, zwei gegenüberliegende Stückplattformen (10, 10), die die Werkstückhaltevorrichtung (100) stützen, und eine Werkzeugstütze (30) aufweist, die ein Werkzeug (60) zum Schneiden des Werkstücks (50) stützt, wobei
die Werkzeugstütze (30) eine Kastenform hat,
wobei die Werkstückhaltevorrichtung (100) Folgendes aufweist:
eine Werkstückbefestigungseinheit (13) zum Halten des Werkstücks (50);
einen Drehtisch (12), der die Stützplattformen (10, 10) überbrückt, um eine Achse (X) in einer Richtung drehbar ist, in der sich die Stützplattformen (10, 10) einander gegenüberliegen, und die Werkstückbefestigungseinheit (13) so stützt, dass sich die Werkstückbefestigungseinheit (13) um eine andere Achse drehen kann, die senkrecht zu der Achse (X) ist; und
einen Motor (14) zum Drehen der
Werkstückbefestigungseinheit (13) an dem Drehtisch (12) an einer Seite, die jener Seite gegenüberliegt, an der die Werkstückbefestigungseinheit (13) gestützt ist,
wobei eine Aushöhlung (130) an einer Fläche (130a) der Werkzeugstütze (30) ausgebildet ist, die dem Drehtisch (12) zugewandt ist und sich zwischen den Stützplattformen (10, 10) befindet, und
wobei der Motor (14) in der Aushöhlung (130) positioniert ist, wenn sich der Drehtisch (12) dreht,
und das Maschinenwerkzeug ist **gekennzeichnet durch** eine Basiseinheit (1), die die Stützplattformen (10, 10) und die Werkzeugstütze (30) stützt, wobei
eine Auslassöffnung (1a) vertikal durchdringend vorgesehen ist, um Staub auszulassen, der zwischen den Stützplattformen (10, 10) an einer oberen Fläche der Basiseinheit (1) vorhanden ist,
wobei ein Abschnitt um die Auslassöffnung (1a) an der oberen Fläche zu einer Seite der Auslassöffnung (1a) geneigt ist, und
wobei ein Auslasskanal (10d), der in einer Richtung durchdringend ausgebildet ist, in der sich die Stützplattformen (10, 10) einander gegenüberliegen, zum Auslassen von Staub an den Stützplattformen (10, 10) ausgebildet ist.

2. Maschinenwerkzeug gemäß Anspruch 1, **dadurch gekennzeichnet, dass** eine Breite des Auslasskanals (10d) an einer der Auslassöffnung (1a) gegenüberliegenden Seite breiter ist als an der Seite der Auslassöffnung (1a).

3. Maschinenwerkzeug gemäß Anspruch 1 oder 2,
**dadurch gekennzeichnet, dass** eine Seitenfläche des Auslasskanals (10d) eine vorstehende, gekrümmte Ebene hat.

4. Maschinenwerkzeug gemäß einem der Ansprüche 1 bis 3, **dadurch gekennzeichnet, dass**
sich eine Fläche (130a) der Werkzeugstütze (30), an der die Aushöhlung (130) ausgebildet ist, von der Basiseinheit (1) erhebt, und
die Aushöhlung (130) in der vertikalen Richtung über die gesamte Fläche (130a) ausgebildet ist, an der die Aushöhlung (130) ausgebildet ist, und sich vertikal zu der Auslassöffnung (1a) fortsetzt.

5. Maschinenwerkzeug gemäß einem der Ansprüche 1 bis 4, **dadurch gekennzeichnet, dass** ein Abschnitt um die Aushöhlung (130) an der oberen Fläche der Werkzeugstütze (30) zu der Aushöhlung (130) nach unten geneigt ist.

6. Maschinenwerkzeug gemäß Anspruch 4, **dadurch gekennzeichnet, dass** die Werkzeugstütze (30) eine Säule (39) um die Aushöhlung (130) hat, die einen trapezförmigen, horizontalen Schnitt mit einer oberen Fläche an einer Seite der Aushöhlung (130) und einer unteren Fläche an einer gegenüberliegenden Seite der Aushöhlung (130) hat, wobei die untere Fläche länger ist als die obere Fläche.

7. Maschinenwerkzeug gemäß einem der Ansprüche 1 bis 4, **dadurch gekennzeichnet, dass**
ein Auslassloch (1b) zum Auslassen von Staub an der gegenüberliegenden Seite der Auslassöffnung (1a) an der oberen Fläche der Basiseinheit (1) angeordnet ist, wobei sich die Werkzeugstütze (30) zwischen der Auslassöffnung (1a) und dem Auslassloch (1b) befindet,
wobei obere Flächen (132, 133) der Werkzeugstütze (30) zu der Auslassöffnung (1a) bzw. dem Auslassloch (1b) von einem mittleren Teil der oberen Flächen nach unten geneigt sind.

8. Maschinenwerkzeug gemäß einem der Ansprüche 1 bis 7, **dadurch gekennzeichnet, dass**
eine Basisauslassöffnung (137), die vertikal durchdringend zum Auslassen von Staub ausgebildet ist, an der Basiseinheit (1) unter der Werkzeugstütze (30) vorgesehen ist, und
ein Stützauslasskanal (135, 136), der in einer Richtung durchdringend ausgebildet ist, in der sich die Stützplattformen (10, 10) einander gegenüberliegen, zum Auslassen von Staub an einer Seitenfläche der Werkzeugstütze (30) ausgebildet ist.

9. Maschinenwerkzeug gemäß Anspruch 8, **dadurch gekennzeichnet, dass** eine Breite des Stützauslasskanals (135, 136) an einer der Basisauslassöffnung (137) gegenüberliegenden Seite breiter ist als an einer Seite der Basisauslassöffnung (137).

## Revendications

1. Machine-outil comprenant un dispositif de maintien de pièce à travailler (100) maintenant une pièce à travailler (50), deux plates-formes de support opposées (10, 10) supportant le dispositif de maintien de pièce à travailler (100) et un support d'outil (30) supportant un outil (60) pour couper la pièce à travailler (50), dans laquelle
le support d'outil (30) est en forme de boîte,
le dispositif de maintien de pièce à travailler (100) comprend :
une unité de fixation de pièce à travailler (13) permettant de maintenir la pièce à travailler (50) ;
une table tournante (12) en pont entre les plates-formes de support (10, 10), rotative autour d'un axe (X) dans une direction dans laquelle les plates-formes de support (10, 10) se font face l'une à l'autre et supportant l'unité de fixation de pièce à travailler (13) de sorte que l'unité de fixation de pièce à travailler (13) puisse entrer en rotation autour d'un autre axe perpendiculaire audit axe (X) ; et
un moteur (14) permettant de mettre en rotation l'unité de fixation de pièce à travailler (13) au niveau de la table tournante (12) d'un côté opposé à un côté sur lequel l'unité de fixation de pièce à travailler (13) est supportée,
une partie concave (130) est formée sur une surface (130a) du support d'outil (30) faisant face à la table tournante (12) et située entre les plates-formes de support (10, 10), et
le moteur (14) est placé dans la partie concave (130) lorsque la table tournante (12) est en rotation,
la machine-outil étant **caractérisée en ce qu'**elle comprend une unité de base (1) supportant les plates-formes de support (10, 10) et le support d'outil (30), dans laquelle
un orifice d'échappement (1a) pénétrant verticalement pour évacuer la poussière est ménagé entre les plates-formes de support (10, 10) sur une surface supérieure de l'unité de base (1),
une portion autour de l'orifice d'échappement (1a) sur la surface supérieure est inclinée vers un côté de l'orifice d'échappement (1a), et
un passage d'échappement (10d), pénétrant dans une direction dans laquelle les plates-formes de support (10, 10) se font face l'une l'autre pour évacuer la poussière, est formé au niveau des plates-formes de support (10, 10).

2. Machine-outil selon la revendication 1, **caractérisée en ce qu'**une largeur du passage d'échappement (10d) est plus large à un côté opposé de l'orifice d'échappement (1a) que le côté de l'orifice d'échappement (1a).

3. Machine-outil selon la revendication 1 ou 2, **caractérisée en ce qu'**une surface latérale du passage d'échappement (10d) a un plan incurvé saillant.

4. Machine-outil selon l'une quelconque des revendications 1 à 3, **caractérisée en ce que**
une surface (130a) du support d'outil (30) où la partie concave (130) est formée s'élève depuis l'unité de base (1), et
la partie concave (130) est formée tout le long de la totalité d'une direction verticale au niveau de la surface (130a) où la partie concave (130) est formée et continue verticalement vers l'orifice d'échappement (1a).

5. Machine-outil selon l'une quelconque des revendications 1 à 4, **caractérisée en ce qu'**une portion autour de la partie concave (130) à la surface supérieure du support d'outil (30) est inclinée en direction du bas vers la partie concave (130).

6. Machine-outil selon la revendication 4, **caractérisée en ce que** le support d'outil (30) comporte une colonne (39), autour de la partie concave (130), ayant une section horizontale trapézoïdale ayant sa surface de dessus sur un côté de la partie concave (130) et sa surface de dessous sur un côté opposé de la partie concave (130), la surface de dessous étant plus longue que la surface de dessus.

7. Machine-outil selon l'une quelconque des revendications 1 à 4, **caractérisée en ce que**
un trou d'échappement (1b) permettant d'évacuer la poussière est agencé sur le côté opposé de l'orifice d'échappement (1a) au niveau de la surface supérieure de l'unité de base (1), le support d'outil (30) étant situé entre l'orifice d'échappement (1a) et le trou d'échappement (1b),
des surfaces supérieures (132, 133) du support d'outil (30) sont inclinées en direction du bas vers l'orifice d'échappement (1a) et le trou d'échappement (1b), respectivement, depuis une partie centrale des surfaces supérieures.

8. Machine-outil selon l'une quelconque des revendications 1 à 7, **caractérisée en ce que**
un orifice d'échappement de base (137) pénétrant verticalement pour évacuer la poussière est ménagé dans l'unité de base (1) sous le support d'outil (30), et
un passage d'échappement de support (135, 136), pénétrant dans une direction dans laquelle les plates-formes de support (10, 10) se font face l'une l'autre pour évacuer la poussière, est formé dans une surface latérale du support d'outil (30).

9. Machine-outil selon la revendication 8, **caractérisée en ce qu'**une largeur du passage d'échappement de support (135, 136) est plus large sur un côté opposé de l'orifice d'échappement de base (137) que sur un côté de l'orifice d'échappement de base (137).
